# EUROPEAN PATENT SPECIFICATION

(11) **EP 2 443 865 B1**
(45) Date of publication and mention of the grant of the patent: **08.05.2013**
(21) Application number: 09779855.7
(22) Date of filing: 19.06.2009
(51) Int. Cl.: H04W 28/24, H04W 4/24

(54) **ESTABLISHING A COMMUNICATION SESSION**
HERSTELLUNG EINER KOMMUNIKATIONSSITZUNG
ÉTABLISSEMENT D'UNE SESSION DE COMMUNICATION

(43) Date of publication of application: 25.04.2012
(73) Proprietor: Telefonaktiebolaget LM Ericsson (publ), 164 83 Stockholm (SE)
(72) Inventor: EMANUELSSON, Sven-Ove, SE-449 43 Nol (SE); FERNANDEZ ALONSO, Susana, ES-28009 Madrid (ES); LOPEZ NIETO, Ana Maria, ES-28035 Madrid (ES); YANG, Yong, SE-431 47 Mölndal (SE)
(74) Representative: Lind, Robert
(86) International application number: PCT/EP2009/057701
(87) International publication number: WO 2010/145717

(56) References cited:
- ERICSSON: "Success Notification for Rule Installation" 3GPP DRAFT; C3-090436 W431 W422 W416 W388 W200 W117 CR_29212_SUCCESSNOTIF_PA3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Antonio, USA; 20090218, 18 February 2009 (2009-02-18), XP050313272 [retrieved on 2009-02-18]
- ERICSSON ET AL: "IP-CAN Session Modification Flows" 3GPP DRAFT; C3-070237 29213 SESSION MODIFICATION FLOWS REVTB_JAV1_TB2_JAV2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. Vancouver; 20070211, 11 February 2007 (2007-02-11), XP050032020 [retrieved on 2007-02-11]
- ERICSSON: "Disc. Successful PCC rule Installation" 3GPP DRAFT; C3-090116 DP_29212_SUCCESSNOTIF_PA2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Antonio, USA; 20090202, 2 February 2009 (2009-02-02), XP050313001 [retrieved on 2009-02-02]
- ERICSSON: "Support for IP-CANs working on NW-only Bearer Establishment Mode" 3GPP DRAFT; 23228_CR0684R2_(REL-8)_S2-071577 CR 23228 R8 NW_ONLY BCM IN IMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Busan, Korea; 20070329, 29 March 2007 (2007-03-29), XP050209094 [retrieved on 2007-03-29]

## Description

### Technical Field

The present invention relates to a method of establishing a communication session. More particularly, the invention relates to establishing a communication session when there is a limitation on the Quality of Service available in the access network.

### Background

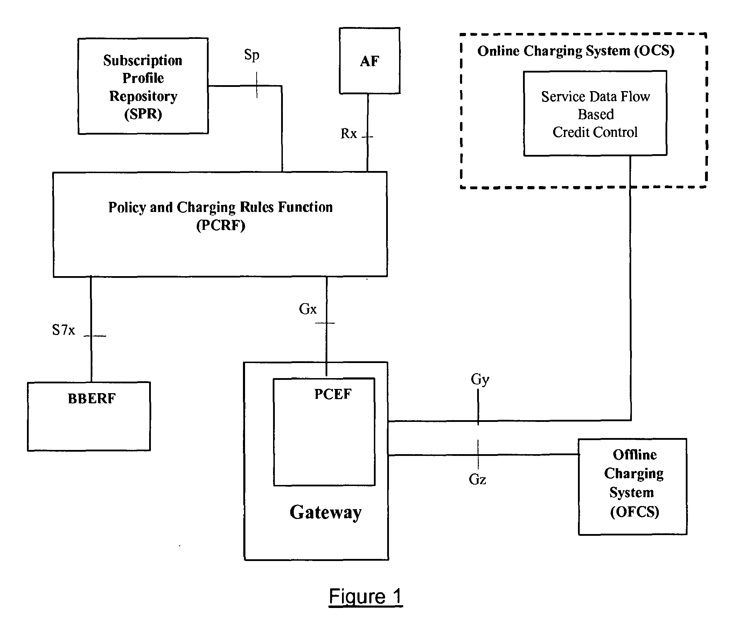

Telecommunications services provided over an IP Connectivity Access Network (IP-CAN) can be subject to charging and policy control mechanisms. This includes Quality of Service (QoS) control. Accordingly, some telecommunications systems incorporate Policy and Charging Control (PCC) architectures to provide this control. 3GPP TS 23.203 V8.1.1 describes such a PCC architecture in respect of packet flows in an IP-CAN session established by a user terminal through an Evolved 3GPP telecommunications system, including both 3GPP accesses (GERAN/UTRAN/E-UTRAN) and Non-3GPP accesses. Figure 1 illustrates schematically an example of the PCC architecture described in 3GPP TS 23.203 that comprises a Policy and Charging Enforcement Function (PCEF), a Bearer Binding and Event Reporting Function (BBERF), a Policy and Charging Rules Function (PCRF), an Application Function (AF), an Online Charging System (OCS), an Offline Charging System (OFCS) and the Subscription Profile Repository (SPR).

The PCRF is a functional element that encompasses policy control decision and flow based charging control functionalities, a combination of the functionality of the Policy Decision Function (PDF) and the Charging Rule Function (CRF) defined in release 6 of the 3GPP specification. A PCRF can be implemented as a standalone node and behaves as a Policy Decision Point (PDP), or Policy Server (PS), that stores user data related to QoS enforcement, access control lists, etc. The PCRF provides policy and charging control for the media components negotiated between the user terminal and the AF. The PCRF receives session and media related information from the AF and informs the AF of traffic plane events. The PCRF also provides network control regarding the service data flow detection, gating, QoS and flow based charging (except credit management) towards the PCEF. The PCRF can provision PCC rules and PCC decisions to the PCEF via the Gx reference point. Criteria such as the QoS subscription information may be used together with policy rules such as, service-based, subscription-based, or pre-defined PCRF internal policies to derive the authorized QoS to be enforced for a service data flow. The PCRF PCC decisions may be based on one or more of the following:
● information obtained from the AF via the Rx reference point, e.g. the session, media and subscriber related information;
● information obtained from the PCEF via the Gx reference point, e.g. IP-CAN bearer attributes, request type, subscriber related information and location information;
● information obtained from the SPR via the Sp reference point, e.g. subscriber and service related data;
● information pre-defined in the PCRF; and
● information obtained from BBERF via the so-called Gxx reference point.

The PCEF is a functional entity that behaves as a Policy Enforcing Point (PEP) for enforcing decisions instructed by the PCRF and the OCS. The PCEF provides service data flow detection (based on the service data flow filter filters defined in the PCC rules) to capture and analyse any user and signalling traffic, to identify the user and to capture details of the service(s) being used. The PCEF can then communicate this information to the PCRF over the Gx interface, to the OCS over the Gy interface and to the OFCS over the Gz interface. The PCEF enforces QoS control according to the QoS authorised by the PCRF. The PCEF is preferably co-located within the gateway node implementing the IP access to the PDN. As such, in a GPRS core network the PCEF is located within the GPRS Gateway Support Node (GGSN), whilst in the case of a CDMA2000 network the PCEF may be located in a Packet Data Serving Node (PDSN), and in a WLAN network the PCEF may be located in a Packet Data Gateway (PDG).

The BBERF functionality includes bearer binding, uplink bearer binding verification and event reporting to the PCRF. For example, in a GPRS core network the bearer binding mechanism associates the PCC rule with the PDP context that is to carry the service data flow. When GPRS Tunnelling Protocol (GTP) is used between the BBERF and the PCEF then bearer binding is performed by the PCEF. Alternatively, when Proxy Mobile IP (PMIP) is used between the BBERF and the PCEF, instead of GTP, then bearer binding is performed by the BBERF.

The OCS provides authorization for the usage of network resources based on the provisioned data and the user activity information it receives from PCEF. This authorization must be granted by the OCS prior to the actual resource usage. When receiving a network resource usage request, the network assembles the relevant charging information and generates a charging event towards the OCS in real-time. The OCS then returns an appropriate resource usage authorization over the Gy interface. The resource usage authorization may be limited in its scope (e.g. volume of data or duration) therefore this authorization may have to be renewed from time to time as long as the user's resource usage persists. The OCS can support time, volume and event-based charging.

The AF is an element offering applications that require policy and/or charging control of the IP-CAN user plane behaviour. The AF communicates with the PCRF over the Rx interface to transfer dynamic session information (e.g. a description of the media to be delivered in the transport layer) required for PCRF decisions, as well as to receive IP-CAN specific information and notifications about IP-CAN bearer level events. One example of an AF is the P-CSCF of the IP Multimedia Core Network (IM CN) subsystem. In the case of a P-CSCF, the information communicated over the Rx interface is derived from the P-CSCF session information (e.g. SDP when SIP is used for signalling) and it mainly includes media components. A media component comprises a set of IP flows, each of which is described by a 5-tuple, the media type and required bandwidth.

The SPR contains all subscriber/subscription related information needed for subscription-based policies and IP-CAN bearer level PCC rules by the PCRF. The Sp interface allows the PCRF to request subscription information related to the IP-CAN transport level policies from the SPR based on a subscriber ID and other IP-CAN session attributes.

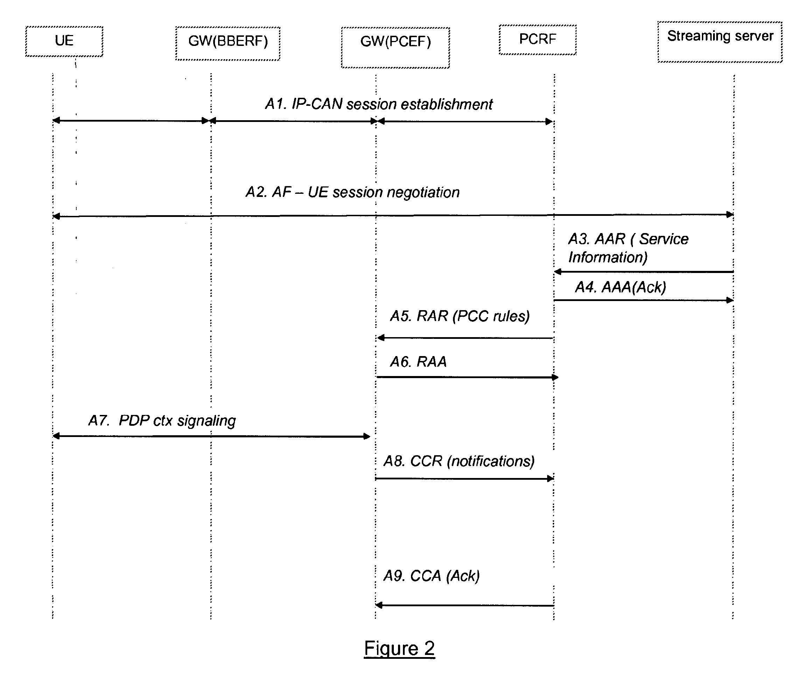

Figure 2 illustrates an example signalling flow diagram of a UE located in a GPRS network accessing a streaming server. In this example, the bearer establishment mode is mixed mode (UE/NW) and the streaming service requires that the bearers are established by the network. In addition, GTP is used between the BBERF and the PCEF, such that the PCEF is in charge of the bearer binding control. The steps performed are as follows:
A1. The terminal establishes an IP-CAN session.
A2. The user connects to the streaming server and negotiates the session. During the session negotiation the IP ports used by the end points, the type of media (audio, video, etc) and the QoS parameters are defined.
A3. The streaming server then sends an Authenticate and Authorize Request (AAR) message to the PCRF containing session information.
A4. The PCRF checks that the session information received in the AAR is in accordance with the operator defined policies, stores the information and responds with an Authenticate and Authorize Answer (AAA) message acknowledgement to the application server.
A5. The PCRF determines the PCC rules that are to be installed at the GW according to defined policies (e.g. location based policies) and sends a Reauthorization Request (RAR) to request that the GW installs, modifies or removes PCC rules accordingly.
A6. The GW sends a Reauthorization Answer (RAA) to the PCRF to acknowledge the RAR message.
A7. The GW initiates the procedure to request creation/update of the PDP context.
A8. The GW sends notifications to the PCRF (i.e. when the PCRF has subscribed to them or when there is an error in the PDP context establishment) in a Credit Control Request (CCR).
A9. The PCRF stores the information received in the notification and acknowledges the CCR with a Credit Control Answer (CCA).

According to current solutions the PCRF receives, from one or more Application Functions (AF), negotiated service information that will be used by the PCRF to provide access control by creating PCC rules. These PCC rules include QoS parameters (bandwidth, QoS class Identifier, Allocation & Retention Priority) and optionally charging information. The PCRF provides this information to the GW, (i.e. the PCEF when GTP is used from the GW towards the access network, or BBERF when PMIP is used). Upon receiving the PCC rules, the GW will proceed with the establishment of the appropriate bearer according to the provided QoS requirements. If there is a bearer already active that meets the QoS requirements, then that bearer will be modified instead of establishing a new bearer.

When the bearers are established by the network, i.e. by the GW, it may be the case that the GW cannot enforce the dynamic PCC rules provided by the PCRF, according to the QoS that is required for the service. For example, this may occur if:
● it is not possible to set up a dedicated bearer because of bandwidth limitations;
● the required bit rate can not be met; or
● the required QoS can no longer be met, for example, when the UE roams to a new Serving GPRS Support Node (SGSN) in a GPRS Core Network, or when the UE roams to a new Radio Access Technology (RAT) even though it is within the same SGSN.

In such circumstances the PCRF cannot be informed of this problem, nor can it be informed of the resources that are available for that service in the access network. As such, the PCRF can not make correctly informed policy decisions and the GW might need to determine the policies locally. However, such decisions will not be based on user conditions or service priorities, but as a generic operator policy (e.g. the GW will not allow any degradation on the provided QoS). Furthermore, this violates the PCC architecture, as the PCRF will be unaware of the final QoS accepted by the network.

In such an erroneous situation, if the user was not yet using the service, and the bearer could not be established/modified because of bandwidth limitations, then the UE would not be able to start using the service, regardless of the priority of the service or the kind of user. As a consequence, the user's perception of the service would then be negative. If the user was already using the service, but the bearer cannot be modified according to meet some new QoS demands (e.g. video was added to an audio service, or the user roamed to a SGSN with QoS capability restrictions), then the user would perceive that the service does not work according to his/her demands.

### Summary

According to a first aspect of the present invention there is provided a method of facilitating a communication session between a user terminal and an Application Function over an IP Connectivity Access Network. The method comprises, at a Policy and Charging Rules Function, receiving information relating to the session from the Application Function, determining one or more Policy and Charging Control rules for the session including deriving a Quality of Service authorised for the session, and sending the Policy and Charging Control rules, including the authorised Quality of Service, to a Policy and Charging Enforcement Function. At the Policy and Charging Enforcement Function, installing the one or more Policy and Charging Control rules including the authorised Quality of Service for the session, and, if it is determined that the authorised Quality of Service cannot be achieved due to a limitation on a Quality of Service available in the Access Network, then reporting this to the Policy and Charging Rules Function and including the available Quality of Service. At the Policy and Charging Rules Function, receiving the report from the Policy and Charging Enforcement Function, including the available Quality of Service, and using the available Quality of Service to determine whether and/or how to maintain the session. The report sent to the Policy and Charging Rules Function may indicate the Policy and Charging Control rules for which the Quality of Service cannot be achieved.

Embodiments of the invention provide that a Policy and Charging Rules Function can be informed about Quality of Service limitations of the access network, such that the policy decisions made the Policy and Charging Rules Function can take into account the QoS currently available in the access network. The Policy and Charging Rules Function can therefore provide for the continuity of services according to its policies.

The step of using the available Quality of Service to determine whether and/or how to maintain the session may comprise one or more of:
at the Policy and Charging Rules Function, determining if the authorised Quality of Service for the session can be modified to achieve the available Quality of Service; and
at the Policy and Charging Rules Function, determining if the user terminal is participating in one or more additional sessions concurrently and, if so, determining if the Quality of Service of one or more of the additional sessions can be downgraded to increase the Quality of Service available for the first mentioned session.

If the authorised Quality of Service for the session can be modified to achieve the available Quality of Service then the Policy and Charging Rules Function may modify the authorised Quality of Service and send the Policy and Charging Control rules to the Policy and Charging Enforcement Function including the modified authorised Quality of Service. The Policy and Charging Rules Function may also notify the Application Function of the modified authorised Quality of Service.

If the user terminal is participating in one or more additional sessions concurrently and if the Quality of Service of one or more of the additional sessions can be downgraded to increase the Quality of Service available for the session, then the Policy and Charging Rules Function may downgrade the Quality of Service of one or more of the additional sessions, send modified Policy and Charging Control rules for the or each of the additional sessions to the Policy and Charging Enforcement Function, including the downgraded Quality of Service, and send the Policy and Charging Control rules for the session to the Policy and Charging Enforcement Function, including the authorised Quality of Service. The Policy and Charging Rules Function may also notify an Application Function associated with the or each of the additional sessions for which the Quality of Service has been downgraded, of the downgraded Quality of Service.

If the Policy and Charging Rules Function determines that the session cannot be maintained then it may notify the Application Function and the Policy and Charging Enforcement Function that the session is to be terminated.

According to a second aspect of the present invention there is provided a method of operating a Policy and Charging Enforcement Function to facilitate a communication session over an IP Connectivity Access Network between a user terminal and an Application Function. The method comprises installing in the Policy and Charging Enforcement Function one or more Policy and Charging Control rules for the session received from a Policy and Charging Rules Function, the Policy and Charging Control rules including a Quality of Service authorised for the session. If it is determined by the Policy and Charging Enforcement Function that the authorised Quality of Service cannot be achieved due to a limitation on a Quality of Service available in the Access Network, then reporting this to the Policy and Charging Rules Function and including the available Quality of Service.

According to a third aspect of the present invention there is provided a method of operating a Policy and Charging Rules Function to facilitate a communication session over an IP Connectivity Access Network between a user terminal and an Application Function. The method comprises receiving information relating to the session from the Application Function, determining one or more Policy and Charging Control rules for the session, including deriving a Quality of Service authorised for the session, sending the Policy and Charging Control rules, including the authorised Quality of Service, to a Policy and Charging Enforcement Function. Receiving a report from the Policy and Charging Enforcement Function that the authorised Quality of Service cannot be achieved due to a limitation on a Quality of Service available in the Access Network, the report including the available Quality of Service, and using the available Quality of Service to determine whether and/or how to maintain the session.

According to a fourth aspect of the present invention there is provided an apparatus configured to operate as a Policy and Charging Enforcement Function to facilitate a communication session over an IP Connectivity Access Network between a user terminal and an Application Function. The apparatus comprises:
a receiver for receiving one or more Policy and Charging Control rules for the session from a Policy and Charging Rules Function, including a Quality of Service authorised for the session,
a processing unit for determining if there is a limitation on a Quality of Service available in the Access Network that prevents the authorised Quality of Service from being achieved and, if so, for generating a report reporting this to the Policy and Charging Rules Function including the available Quality of Service, and
a transmitter for sending the report to the Policy and Charging Rules Function.

The processing unit may be further arranged to indicate the Policy and Charging Control rules for which the Quality of Service cannot be achieved in the report to be sent to the Policy and Charging Rules Function.

According to a fifth aspect of the present invention there is provided an apparatus configured to operate as a Policy and Charging Rules Function to facilitate a communication session over an IP Connectivity Access Network between a user terminal and an Application Function. The apparatus comprises:
a receiver for receiving information relating to the session from the Application Function;
a rules generation unit for determining one or more Policy and Charging Control rules for the session, including deriving a Quality of Service authorised for the session;
a transmitter for sending the Policy and Charging Control rules, including the authorised Quality of Service, to a Policy and Charging Enforcement Function;
a receiver for receiving a report from the Policy and Charging Enforcement Function that the authorised Quality of Service cannot be achieved due to a limitation on the Quality of Service available in the Access Network, the report including the available Quality of Service; and
a processing unit for using the available Quality of Service to determine whether and/or how to maintain the session.

In order to determine whether and/or how to maintain the session, the processing unit may be arranged to perform one or more of:
determine if the authorised Quality of Service for the session can be modified to achieve the available Quality of Service; and
determine if the user terminal is participating in one or more additional sessions concurrently and, if so, determine if the Quality of Service of one or more of the additional sessions can be downgraded to increase the Quality of Service -available for the first mentioned session.

The processing unit may be further arranged to modify the authorised Quality of Service, if the authorised Quality of Service for the session can be modified to achieve the available Quality of Service.

The apparatus may further comprise a transmitter for sending the Policy and Charging Control rules to the Policy and Charging Enforcement Function including the modified authorised Quality of Service, and a transmitter for notifying the Application Function of the modified authorised Quality of Service.

The processing unit may be further arranged to downgrade the Quality of Service of one or more of the additional sessions, if the user terminal is participating in one or more additional sessions concurrently and the Quality of Service of one or more of the additional sessions can be downgraded to increase the Quality of Service available for the session. The apparatus may then further comprise a transmitter for sending additional Policy and Charging Control rules for the or each of the additional sessions to the Policy and Charging Enforcement Function, including the downgraded Quality of Service, and for sending the Policy and Charging Control rules for the first mentioned session to the Policy and Charging Enforcement Function, including the authorised Quality of Service. The apparatus may also further comprise a transmitter for notifying an Application Function associated with the or each of the additional sessions for which the Quality of Service has been downgraded of the downgraded Quality of Service.

If it is determined that the session cannot be maintained, the processing unit may be further arranged to notify the Application Function and the Policy and Charging Enforcement Function that the session is to be terminated.

### Brief Description of the Drawings

Figure 1 illustrates schematically an example of PCC architecture in accordance with 3GPP TS 23.203;
Figure 2 illustrates an example signalling flow diagram of a UE located in a GPRS network accessing a streaming server;
Figure 3 illustrates an example-signalling flow diagram of a UE establishing a session with an AF according to an embodiment of the present invention;
Figure 4 illustrates an example of the process implemented by a PCEF according to an embodiment of the present invention;
Figure 5 illustrates an example of the process implemented by a PCRF according to an embodiment of the present invention;
Figure 6 illustrates schematically an example of a PCEF according to an embodiment of the present invention; and
Figure 7 illustrates schematically an example of a PCRF 5 according to an embodiment of the present invention.

### Detailed Description

Current 3GPP specifications define certain errors that are to be reported (e.g. when the PCC rules cannot be installed or enforced, or when the resources could not be allocated) such that the PCRF can be informed of a possible error situation. However, it has been recognized here that the PCRF still has no information about the QoS limitations, such that the PCRF cannot act to allow the continuity of the service according to its policies, or to allocate the available QoS resources according to service and user priorities. Furthermore, since the PCRF is not aware of the available QoS, the PCRF can only terminate the session towards the Application Function or accept the modification of the service in spite of the QoS downgrading. This leads to a deteriorated experience for the user experience and can deprive the operator of the opportunity to charge the user for the service usage.

In order to overcome, or at least mitigate the problems identified above, there will now be described a method of reporting, from the access network to the PCRF, that there is a QoS limitation in the network and therefore that the QoS required by the PCRF cannot be accepted. The method provides that the PCEF can inform the PCRF of the QoS that is both acceptable to the network for the associated service, and that does not require the network to degrade or reject the service(s).

The method further provides that, upon receipt of this information, the PCRF will, determine the actions to be performed based on the user profile, service priority and available QoS. For example these actions can include:
● rejecting the service establishment/modification (e.g. if the service requires certain QoS requirements that cannot be ensured to work);
● accepting the service establishment/modification with a degraded QoS (e.g. if the type of service and the type of subscriber allows such degradation); or
● redistributing the available QoS among the services currently in use (e.g. maintaining the overall QoS initially provided to the user by decrementing the QoS provided to those services with a lower priority);

The PCRF will then also take any further action required. For example, the PCRF may then terminate the AF session or inform the AF about the degradation of the QoS of the service, adapt the charging control to take account of the QoS finally accepted for the sevice and/or the notify the UE regarding any degradation of the QoS.

According to this method, when a UE establishes an AF session, the AF sends an AAR request to the PCRF in order to provide the service information. The PCRF then uses the service information received from the AF (e.g. SDP information or other available application information) and/or the subscription information received from the SPR to determine the PCC rules to be installed in the PCEF, along with the authorised QoS for each PCC rule. If the PCEF cannot enforce the QoS for any reason (e.g. the access network does not currently have enough resources, or the SGSN does not have the capacity to initiate PDP context establishment, etc), then the PCEF sends a CCR update, including a Charging-Rule-Report parameter that informs the PCRF of an error due to the QoS limitation and includes the QoS supported for the relevant PCC rules. When the PCRF receives this information it performs policy evaluation and again determines the authorised QoS for each PCC rule, taking into account the QoS information received from the PCEF.

In order to implement this method, the Gx interface between the PCEF and the PCRF will require extension to provide the notification of the QoS limitation and the information relating to the QoS available for each PCC rule. The Rx reference point also requires extension in order to permit the PCRF to inform the AF of the available QoS information as part of a notification procedure.

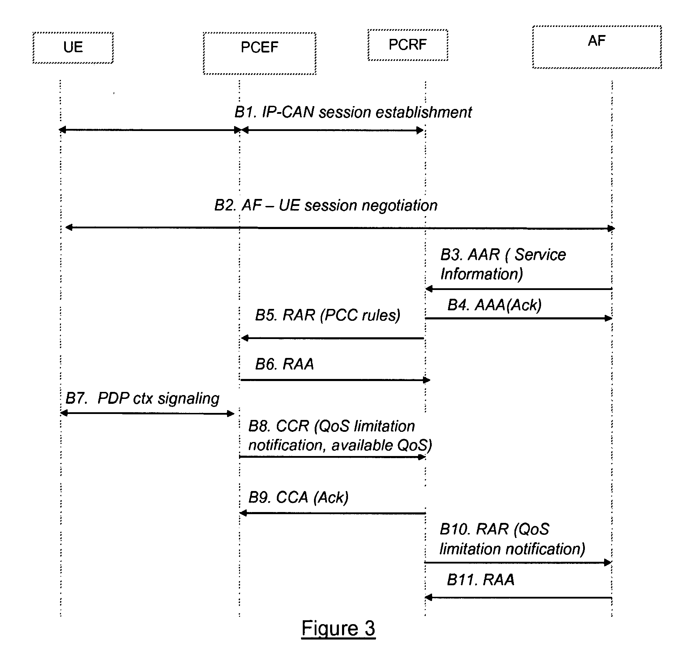

Figure 3 illustrates an example signalling flow diagram of a UE establishing a session with an AF in which the PCEF determines that it cannot enforce the QoS authorised by the PCRF. The steps performed are as follows:
B1. The terminal establishes an IP-CAN session.
B2. The user connects to the AF and negotiates the session. During the session negotiation the IP ports used by the end points, the type of media (audio, video, etc) and the QoS parameters are defined.
B3. The AF then sends an Authenticate and Authorize Request (AAR) message to the PCRF containing session information, including information relating to the QoS negotiated in the application layer.
B4. The PCRF checks that the session information received in the AAR is in accordance with the operator defined policies, stores the information and responds with an Authenticate and Authorize Answer (AAA) message acknowledgement to the AF.
B5. The PCRF determines the PCC rules that are to be installed at the PCEF according to the received information and the operator defined policies, , including deriving the authorized QoS, and sends a Reauthorization Request (RAR) to request that the PCEF installs, modifies or removes PCC rules accordingly.
B6. The PCEF installs the received PCC rules and sends a Reauthorization Answer (RAA) to the PCRF to acknowledge the RAR message.
B7. The PCEF initiates IP-CAN bearer establishment or modification. For example, in a GPRS core network the PCEF initiates PDP context signaling, either requesting establishment of PDP context or modification of an existing PDP context.
B8. In this case, the authorized QoS cannot be enforced (i.e. due to a lack of resources), therefore the PCEF sends a CCR message to the PCRF, notifying the PCRF of the QoS limitation, and includes the information regarding the QoS available in the access network for those PCC rules affected by the QoS limitation.
B9. The PCRF then makes a policy decision that takes into account the QoS information received from the PCEF, modifying the PCC rules if required, and sends the PCC rules to the PCEF in a CCA message.
B10.Optionally, the PCRF may then inform the AF of the QoS limitation in the access network. For example, the PCRF may send a RAR message to the AF including a QoS Limitation Notification parameter.
B11.The AF will then send a Reauthorization Answer (RAA) to the PCRF to acknowledge the-RAR message.

This method of notifying the PCRF of QoS limitations in the access network is equally applicable when, for example, the QoS limitation occurs during the use of the service by the user (e.g. when the UE roams to a SGSN that has bandwidth limitations or that does not support the NW initiated procedures). In this case, the PCEF notifies the PCRF of the QoS limitations and the available resources for each group of PCC rules. The PCRF can then perform policy evaluation taking into account the information received from the PCEF regarding the QoS limitations. Depending on the kind of service, the PCRF may accept degradation of the QoS for the session, redistribute the available QoS between the impacted PCC rules or may terminate the AF session. The PCRF may then notify an AF of any QoS limitations or degradation that relate to a relevant session.

As noted above, in order to implement this method the Gx interface between the PCEF and the PCRF will require extension to provide the notification of the QoS limitation and information regarding the QoS available for each PCC rule. This may be achieved by the addition of one or more instances of the Charging-Rule-Report AVP, depending on the number of impacted bearers, each with the following modifications:
● a new PCC-Rule-Status value (e.g. "PENDING") to indicate to the PCRF that the PCEF is waiting for an action from the PCRF;
● a new Rule-Failure-Code value to indicate a QoS limitation in the access network;
● a new QoS-Information AVP to provide the available QoS (i.e. the Maximum Bit Rate (MBR) and/or Guaranteed Bit Rate (GBR) corresponding to the QoS Class Identifier (QCI)/Allocation and Retention Priority (ARP) of the impacted bearer); and
● the Charging-Rule-Name of the PCC rules impacted by the QoS limitation.

As such, the proposed Charging-Rule-Report AVP may take the format:

```
       Charging-Rule-Report {
                             1 * n [ charging-rule-name ]
                             [PCC-Rule-Status] {Pending}
                             [Rule-failure-code] {QoS limitation}
                            [QoS-Information] { QCI , MBR, GBR, ARP }
```

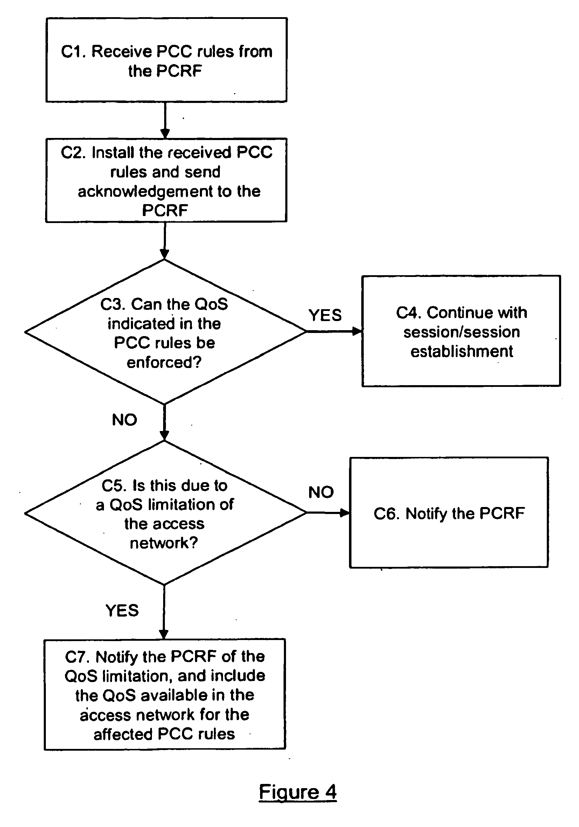

Figure 4 illustrates an example of the process implemented by a PCEF when the QoS for a session cannot be enforced due to limitations on the QoS available in the access network. The steps performed are as follows:
C1. The PCEF receives the PCC rules for the session in a RAR from the PCRF. Each of the PCC rules includes the authorised QoS for that rule.
C2. The PCEF installs the received PCC rules as required and sends a RAA to the PCRF.
C3. The PCEF then determines if the authorized QoS indicated in the PCC rules can be enforced.
C4. If the authorized QoS can be enforced, then the PCEF continues to modify the session, establishing or modifying IP-CAN bearers with the required QoS.
C5. If the authorized QoS cannot be enforced, then the PCEF determines if this is due to.a limitation on the QoS available in the access network (i.e. due to a lack of resources).
C6. If it is not due to a QoS limitation, then the PCEF notifies the PCRF according to standard procedures.
C7. If it is due to a QoS limitation, then the PCEF sends a CCR message to the PCRF, notifying the PCRF of the QoS limitation, and includes the information regarding the QoS available in the access network for those PCC rules affected by the QoS limitation.

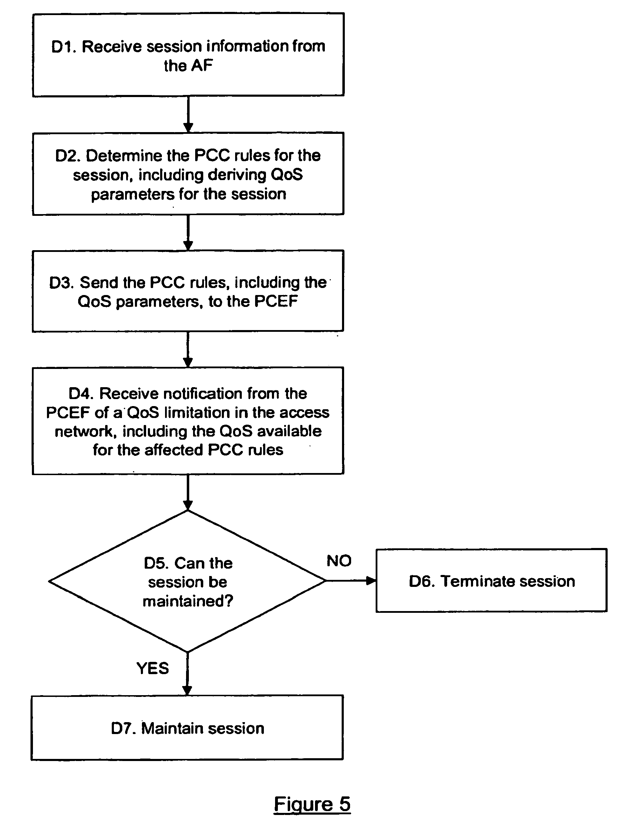

Figure 5 illustrates an example of the process implemented by a PCRF when the QoS for a session cannot be enforced due to limitations on the QoS available in the access network. The steps performed are as follows:
D1. The PGRF receives an AAR message from an AF containing session information, and including information relating to the QoS negotiated in the application layer. The PCRF checks that the session information received in the AAR is in accordance with the operator defined policies, stores the information and responds with an AAA message acknowledgement to the AF.
D2. The PCRF determines the PCC rules that are to be installed at the PCEF according to the received information and the operator defined policies, including deriving the authorized QoS parameters for the session.
D3. The PCRF sends the PCC rules to the PCEF in a RAR message, including the authorised QoS parameters for each PCC rule. The PCRF receives a response from the PCEF in the form of a RAA message.
D4. The PCRF then receives notification from the PCEF of a limitation on the QoS available in the access network, including information regarding the QoS available in the access network for those PCC rules affected by the QoS limitation.
D5. The PCRF then makes a policy decision, taking into account the available QoS, to determine if and how the session can be maintained. For example, the PCRF may determine if the session can be established with a downgraded QoS, or, if there are additional sessions that are currently ongoing, the PCRF may determine if the QoS of these sessions can be downgraded to increase the QoS available for this session. The PCRF may perform either one of these steps individually. Alternatively, if the PCRF determines that a first of these two actions is not possible, the PCRF may then determine if the second action is possible.
D6. If it is determined that the session cannot be maintained then the PCRF will terminate the session according to standard procedures.
D7. If it is determined that the session can be maintained, then the PCRF takes the necessary steps to maintain the session and notifies the PCEF accordingly. For example, if the PCRF can downgrade the QoS authorised for the session, then the PCRF updates the PCC rules accordingly and sends the updated rules to the PCEF. The PCRF may also notify the AF of the downgraded QoS. Alternatively, if the PCRF downgrades the QoS authorised for one or more concurrent sessions, then the PCRF will update the PCC rules for each of the affected sessions and send these updated rules to the PCEF. In addition, the PCRF will re-send the PCC rules for the session for which the QoS could previously not be achieved to the PCEF, which should now be able to enforce the authorised QoS. The PCRF may notify any AF associated with a session for which the QoS has been downgraded.

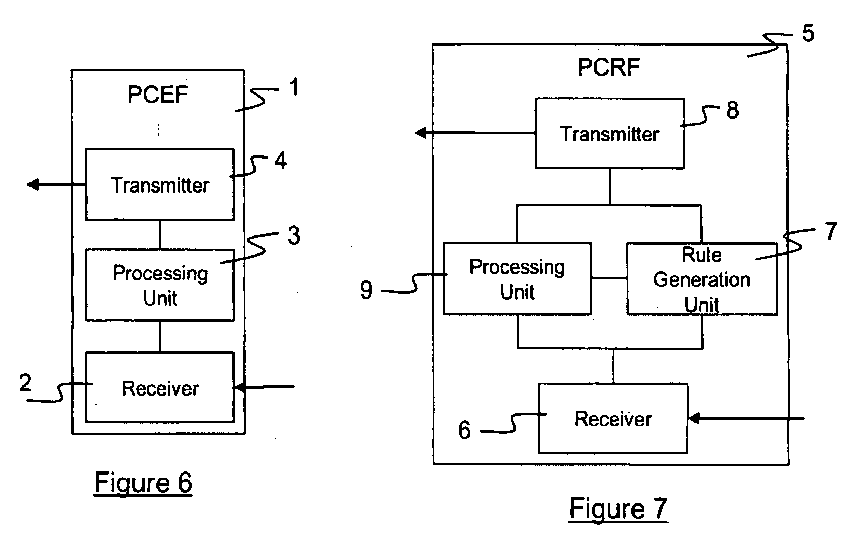

Figure 6 illustrates schematically an example of a PCEF 1 suitable for implementing the method described above. The PCEF 1 can be implemented as a combination of computer hardware and software. The PCEF 1 comprises a receiver 2 for receiving the PCC rules for a session from a PCRF, the PCC rules including the QoS authorised for the session, a processing unit 3 for determining if there is a limitation on the QoS available in the access network that prevents the PCEF from enforcing the authorised QoS and, if so, for generating a report for to be sent to the PCRF reporting this limitation and the QoS available in the access network. The PCEF further comprises a transmitter 4 for sending the report to the PCRF. When generating the QoS limitation report to be sent to the PCRF, the processing unit 3 may indicate the PCC rules for which the QoS cannot be enforced and the QoS available in the access network for those PCC rules.

Figure 7 illustrates schematically an example of a PCRF 5 suitable for implementing the method described above. The PCRF 5 can be implemented as a combination of computer hardware and software. The PCRF 5 comprises a receiver 6 for receiving session information from an AF, for a session between the AF and a user terminal, a rules generation unit 7 for determining the PCC rules for the session, including deriving the authorised QoS for the session, and a transmitter 8 for sending the PCC rules including the authorised QoS to a PCEF. The PCRF 5 further comprises a receiver 6 for receiving a report from the PCEF that the authorised QoS cannot be enforced due to a limitation on the QoS available in the access network, the report including details of the QoS available, and a processing unit 9 for using the available QoS to determine how to maintain the session. In order to determine how to maintain the session, the processing unit 9 may determine if the authorised QoS for the session can be modified to achieve the QoS available in the access network. In addition or alternatively, the processing unit 9 may determine if the user terminal is participating in one or more additional sessions concurrently and, if so, determine if the QoS of one or more of the additional sessions can be downgraded to increase the QoS available for the session.

If the processing unit 9 determines that the QoS authorised for the session can be modified to within the QoS available in the access network then the processing unit 9 may modify the authorised QoS accordingly. The transmitter 8 can then be used to send the PCC rules to the PCEF, the PCC rules including the modified QoS that has now been authorised for the session. In addition, the transmitter 8 can also be used to notify the AF of the modified QoS.

If the processing unit 9 determines that the user terminal is participating in one or more additional-sessions concurrently, and that the QoS of one or more of the additional sessions can be downgraded to increase the QoS available for the session, then the processing unit 9 may downgrade the QoS of one or more of the additional sessions. The transmitter 8 can then be used to send PCC rules to the PCEF for the additional sessions for which the QoS has been downgraded, these PCC rules including the downgraded QoS, and for sending the PCC rules for this foremost session to the PCEF, including the authorised QoS. In addition, the transmitter 8 can also be used to notify those AFs associated with the additional sessions for which the QoS has been downgraded of the downgraded QoS.

The methods described above provide that the PCRF can be informed about QoS limitations of the access network, such that the policy decisions made the PCRF can take into account the QoS currently available in the access network. The PCRF can therefore provide for the continuity of services according to its policies. For example, the PCRF can allocate the available QoS resources according to service and user priorities in order to continue the services under different conditions, or can continue with high priority services but terminate other services of a lower priority. Furthermore, the PCRF can adapt the charging information to the QoS that has been delivered and can notify the application layer of the QoS that is provided in the access network. This also provides for improved user perception of the service delivery, and ensures that the operator can charge the user for the service usage.

It will be appreciated by the person of skill in the art that various modifications may be made to the above-described embodiments without departing from the scope of the present invention as defined by the appended claims.

## Claims

1. A method of facilitating a communication session between a user terminal and an Application Function over an IP Connectivity Access Network, the method comprising:
at a Policy and Charging Rules Function, receiving information relating to the session from the Application Function (D1), determining one or more Policy and Charging Control rules for the session (D2), including deriving a Quality of Service authorised for the session, and sending the Policy and Charging Control rules, including the authorised Quality of Service, to a Policy and Charging Enforcement Function (D3);
the method being **characterised by**:
at the Policy and Charging Enforcement Function, installing the one or more Policy and Charging Control rules (C2), including the authorised Quality of Service for the session, and, if it is determined that the authorised Quality of Service cannot be achieved due to a limitation on a Quality of Service available in the Access Network, then reporting this to the Policy and Charging Rules Function and including the available Quality of Service (C7);
at the Policy and Charging Rules Function, receiving the report from the Policy and Charging Enforcement Function including the available Quality of Service, (D4) and using the available Quality of Service to determine whether and/or how to maintain the session (D5).

2. A method as claimed in claim 1, wherein the report sent to the Policy and Charging Rules Function indicates the Policy and Charging Control rules for which the Quality of Service cannot be achieved.

3. A method as claimed in claim 1, wherein the step of using the available Quality of Service to determine whether and/or how to maintain the session comprises one or more of:
at the Policy and Charging Rules Function, determining if the authorised Quality of Service for the session can be modified to achieve the available Quality of Service; and
at the Policy and Charging Rules Function, determining if the user terminal is participating in one or more additional sessions concurrently and, if so, determining if the Quality of Service of one or more of the additional sessions can be downgraded to increase the Quality of Service available for the first mentioned session.

4. A method as claimed in claim 3, wherein if the authorised Quality of Service for the session can be modified to achieve the available Quality of Service the method further comprises:
at the Policy and Charging Rules Function, modifying the authorised Quality of Service and sending the Policy and Charging Control rules to the Policy and Charging Enforcement Function including the modified authorised Quality of Service.

5. A method as claimed in claim 3, wherein if the user terminal is participating in one or more additional sessions concurrently and if the Quality of Service of one or more of the additional sessions can be downgraded to increase the Quality of Service available for the session the method further comprises:
at the Policy and Charging Rules Function, downgrading the Quality of Service of one or more of the additional sessions, sending modified Policy and Charging Control rules for the or each of the additional sessions to the Policy and Charging Enforcement Function, including the downgraded Quality of Service, and sending the Policy and Charging Control rules for the session to the Policy and Charging Enforcement Function, including the authorised Quality of Service.

6. A method as claimed in claim 3, wherein if the Policy and Charging Rules Function determines that the session cannot be maintained the method further comprises:
at the Policy and Charging Rules Function, notifying the Application Function and the Policy and Charging Enforcement Function that the session is to be terminated (D6).

7. A method of operating a Policy and Charging Enforcement Function to facilitate a communication session over an IP Connectivity Access Network between a user terminal and an Application Function, the method comprising:
installing in the Policy and Charging Enforcement Function one or more Policy and Charging Control rules for the session received from a Policy and Charging Rules Function (C2), the Policy and Charging Control rules including a Quality of Service authorised for the session;
the method being **characterised by**:
if it is determined by the Policy and Charging Enforcement Function that the authorised Quality of Service cannot be achieved due to a limitation on a Quality of Service available in the Access Network, then reporting this to the Policy and Charging Rules Function and including the available Quality of Service (C7).

8. A method of operating a Policy and Charging Rules Function to facilitate a communication session over an IP Connectivity Access Network between a user terminal and an Application Function, the method comprising:
receiving information relating to the session from the Application Function (D1);
determining one or more Policy and Charging Control rules for the session (D2), including deriving a Quality of Service authorised for the session;
sending the Policy and Charging Control rules, including the authorised Quality of Service, to a Policy and Charging Enforcement Function (D3);
the method being **characterised by**:
receiving a report from the Policy and Charging Enforcement Function that the authorised Quality of Service cannot be achieved due to a limitation on a Quality of Service available in the Access Network (D4), the report including the available Quality of Service; and
using the available Quality of Service to determine whether and/or how to maintain the session (D5).

9. An apparatus configured to operate as a Policy and Charging Enforcement Function (1) to facilitate a communication session over an IP Connectivity Access Network between a user terminal and an Application Function, the apparatus comprising:
a receiver (2) for receiving one or more Policy and Charging Control rules for the session from a Policy and Charging Rules Function, including a Quality of Service authorised for the session;
the apparatus being **characterised by**:
a processing unit (3) for determining if there is a limitation on a Quality of Service available in the Access Network that prevents the authorised Quality of Service from being achieved and, if so, for generating a report reporting this to the Policy and Charging Rules Function including the available Quality of Service ; and
a transmitter (4) for sending the report to the Policy and Charging Rules Function.

10. An apparatus as claimed in claim 9, wherein the processing unit (3) is further arranged to indicate the Policy and Charging Control rules for which the Quality of Service cannot be achieved in the report to be sent to the Policy and Charging Rules Function.

11. An apparatus configured to operate as a Policy and Charging Rules Function (5) to facilitate a communication session over an IP Connectivity Access Network between a user terminal and an Application Function, the apparatus comprising:
a receiver (6) for receiving information relating to the session from the Application Function;
a rules generation unit (7) for determining one or more Policy and Charging Control rules for the session, including deriving a Quality of Service authorised for the session;
a transmitter (8) for sending the Policy and Charging Control rules, including the authorised Quality of Service, to a Policy and Charging Enforcement Function;
the apparatus being **characterised by**:
a receiver (6) for receiving a report from the Policy and Charging Enforcement Function that the authorised Quality of Service cannot be achieved due to a limitation on the Quality of Service available in the Access Network, the report including the available Quality of Service; and
a processing unit (9) for using the available Quality of Service to determine whether and/or how to maintain the session.

12. An apparatus as claimed in claim 11, wherein in order to determine whether and/or how to maintain the session the processing unit (9) is arranged to perform one or more of:
determine if the authorised Quality of Service for the session can be modified to achieve the available Quality of Service; and
determine if the user terminal is participating in one or more additional sessions concurrently and, if so, determine if the Quality of Service of one or more of the additional sessions can be downgraded to increase the Quality of Service available for the first mentioned session.

13. An apparatus as claimed in claim 12, wherein the processing unit (9) is further arranged to modify the authorised Quality of Service if the authorised Quality of Service for the session can be modified to achieve the available Quality of Service.

14. An apparatus as claimed in claim 11, wherein the processing unit (9) is further arranged to downgrade the Quality of Service of one or more of the additional sessions, if the user terminal is participating in one or more additional sessions concurrently and the Quality of Service of one or more of the additional sessions can be downgraded to increase the Quality of Service available for the session.

15. An apparatus as claimed in claim 14, the apparatus further comprising:
a transmitter (8) for sending additional Policy and Charging Control rules for the or each of the additional sessions to the Policy and Charging Enforcement Function, including the downgraded Quality of Service, and for sending the Policy and Charging Control rules for the first mentioned session to the Policy and Charging Enforcement Function, including the authorised Quality of Service.

## Patentansprüche

1. Verfahren zum Erleichtern einer Kommunikationssitzung zwischen einem Benutzerendgerät und einer Anwendungsfunktion über ein IP-Konnektivitäts-Zugangsnetzwerk, das Verfahren umfassend:
an einer Verfahrensweisen- und Gebührenerfassungsregeln-Funktion, Empfangen von Informationen, die zu der Sitzung in Beziehung stehen, von der Anwendungsfunktion (D1), Bestimmen einer oder mehrerer Verfahrensweisen- und Gebührenerfassungs-Kontrollregeln für die Sitzung (D2) einschließlich von Ableiten einer autorisierten Dienstgüte für die Sitzung und Senden der Verfahrensweisen- und Gebührenerfassungs-Kontrollregeln einschließlich der autorisierten Dienstgüte an eine Verfahrensweisen- und Gebührenerfassungs-Durchsetzungsfunktion (D3);
das Verfahren **gekennzeichnet durch**:
an der Verfahrensweisen- und Gebührenerfassungs-Durchsetzungsfunktion, Installieren der einen oder mehreren Verfahrensweisen- und Gebührenerfassungs-Kontrollregeln (C2) einschließlich der autorisierten Dienstgüte für die Sitzung und, wenn bestimmt wird, dass die autorisierte Dienstgüte aufgrund einer Begrenzung der in dem Zugangsnetzwerk verfügbaren Dienstgüte nicht erreicht werden kann, dann Berichten dieses an die Verfahrensweisen- und Gebührenerfassungsregeln-Funktion und Einschließen der verfügbaren Dienstgüte (C7);
an der Verfahrensweisen- und Gebührenerfassungsregeln-Funktion, Empfangen des Berichts von der Verfahrensweisen- und Gebührenerfassungs-Durchsetzungsfunktion einschließlich der verfügbaren Dienstgüte (D4) und Verwenden der verfügbaren Dienstgüte zum Bestimmen, ob und/oder wie die Sitzung aufrechtzuerhalten ist (D5).

2. Verfahren nach Anspruch 1, wobei der an die Verfahrensweisen- und Gebührenerfassungsregeln-Funktion gesandte Bericht die Verfahrensweisen- und Gebührenerfassungs-Kontrollregeln anzeigt, für die die Dienstgüte nicht erreicht werden kann.

3. Verfahren nach Anspruch 1, wobei der Schritt der Verwendung der verfügbaren Dienstgüte zum Bestimmen, ob und/oder wie die Sitzung aufrechtzuerhalten ist, eines oder mehreres des Folgenden umfasst:
an der Verfahrensweisen- und Gebührenerfassungsregeln-Funktion, Bestimmen, ob die autorisierte Dienstgüte für die Sitzung modifiziert werden kann, um die verfügbare Dienstgüte zu erreichen; und
an der Verfahrensweisen- und Gebührenerfassungsregeln-Funktion, Bestimmen, ob das Benutzerendgerät an einer oder mehreren zusätzlichen Sitzungen gleichzeitig teilnimmt, und falls ja, Bestimmen, ob die Dienstgüte von einer oder mehreren der zusätzlichen Sitzungen herabgestuft werden kann, um die für die zuerst erwähnte Sitzung verfügbare Dienstgüte zu erhöhen.

4. Verfahren nach Anspruch 3, wobei, wenn die autorisierte Dienstgüte für die Sitzung modifiziert werden kann, um die verfügbare Dienstgüte zu erreichen, das Verfahren ferner umfasst:
an der Verfahrensweisen- und Gebührenerfassungsregeln-Funktion, Modifizieren der autorisierten Dienstgüte und Senden der Verfahrensweisen-Gebührenerfassungs-Kontrollregeln an die Verfahrensweisen- und Gebührenerfassungs-Durchsetzungsfunktion, einschließlich der modifizierten autorisierten Dienstgüte.

5. Verfahren nach Anspruch 3, wobei, wenn das Benutzerendgerät an einer oder mehreren zusätzlichen Sitzungen gleichzeitig teilnimmt und wenn die Dienstgüte von einer oder mehreren der zusätzlichen Sitzungen herabgestuft werden kann, um die für die Sitzung verfügbare Dienstgüte zu erhöhen, das Verfahren ferner umfasst:
an der Verfahrensweisen- und Gebührenerfassungsregeln-Funktion, Herabstufen der Dienstgüte von einer oder mehreren der zusätzlichen Sitzungen, Senden modifizierter Verfahrensweisen- und Gebührenerfassungs-Kontrollregeln für die oder jede der zusätzlichen Sitzungen an die Verfahrensweisen- und Gebührenerfassungs-Durchsetzungsfunktion, einschließlich der herabgestuften Dienstgüte, und Senden der Verfahrensweisen- und Gebührenerfassungs-Kontrollregeln für die Sitzung an die Verfahrensweisen- und Gebührenerfassungs-Durchsetzungsfunktion, einschließlich der autorisierten Dienstgüte.

6. Verfahren nach Anspruch 3, wobei, wenn die Verfahrensweisen- und Gebührenerfassungsregeln-Funktion bestimmt, dass die Sitzung nicht aufrechterhalten werden kann, das Verfahren ferner umfasst:
an der Verfahrensweisen- und Gebührenerfassungsregeln-Funktion, Benachrichtigen der Anwendungsfunktion und der Verfahrensweisen- und Gebührenerfassungs-Durchsetzungsfunktion, dass die Sitzung zu beenden ist (D6).

7. Verfahren zum Operieren einer Verfahrensweisen- und Gebührenerfassungs-Durchsetzungsfunktion, um eine Kommunikationssitzung über ein IP-Konnektivitäts-Zugangsnetzwerk zwischen einem Benutzerendgerät und einer Anwendungsfunktion zu erleichtern, das Verfahren umfassend:
Installieren, in der Verfahrensweisen- und Gebührenerfassungs-Durchsetzungsfunktion, einer oder mehrerer Verfahrensweisen- und Gebührenerfassungs-Kontrollregeln für die Sitzung, empfangen von einer Verfahrensweisen- und Gebührenerfassungsregeln-Funktion (C2), wobei die Verfahrensweisen- und Gebührenerfassungs-Kontrollregeln eine autorisierte Dienstgüte für die Sitzung enthalten;
das Verfahren **gekennzeichnet durch**:
wenn **durch** die Verfahrensweisen- und Gebührenerfassungs-Durchsetzungsfunktion bestimmt wird, dass die autorisierte Dienstgüte aufgrund einer Begrenzung einer in dem Zugangsnetzwerk verfügbaren Dienstgüte nicht erreicht werden kann, dann Berichten dieses an die Verfahrensweisen- und Gebührenerfassungsregeln-Funktion und Einschließen der verfügbaren Dienstgüte (C7).

8. Verfahren zum Operieren einer Verfahrensweisen- und Gebührenerfassungsregeln-Funktion, um eine Kommunikationssitzung über ein IP-Konnektivitäts-Zugangsnetzwerk zwischen einem Benutzerendgerät und einer Anwendungsfunktion zu erleichtern, das Verfahren umfassend:
Empfangen von Informationen, die zu der Sitzung in Beziehung stehen, von der Anwendungsfunktion (D1),
Bestimmen einer oder mehrerer Verfahrensweisen- und Gebührenerfassungs-Kontrollregeln für die Sitzung (D2) einschließlich von Ableiten einer für die Sitzung autorisierten Dienstgüte;
Senden der Verfahrensweisen- und Gebührenerfassungs-Kontrollregeln einschließlich der autorisierten Dienstgüte an eine Verfahrensweisen- und Gebührenerfassungs-Durchsetzungsfunktion (D3);
das Verfahren **gekennzeichnet durch**:
Empfangen des Berichts von der Verfahrensweisen- und Gebührenerfassungs-Durchsetzungsfunktion, dass die autorisierte Dienstgüte aufgrund einer Begrenzung der in dem Zugangsnetzwerk verfügbaren Dienstgüte nicht erreicht werden kann (D4), wobei der Bericht die verfügbare Dienstgüte enthält; und
Verwenden der verfügbaren Dienstgüte zum Bestimmen, ob und/oder wie die Sitzung aufrechtzuerhalten ist (D5).

9. Gerät, konfiguriert zum Operieren als eine Verfahrensweisen- und Gebührenerfassungs-Durchsetzungsfunktion (1), um eine Kommunikationssitzung über ein IP-Konnektivitäts-Zugangsnetzwerk zwischen einem Benutzerendgerät und einer Anwendungsfunktion zu erleichtern, das Gerät umfassend:
einen Empfänger (2) zum Empfangen einer oder mehrerer Verfahrensweisen- und Gebührenerfassungs-Kontrollregeln für die Sitzung von einer Verfahrensweisen- und Gebührenerfassungsregeln-Funktion einschließlich einer für die Sitzung autorisierten Dienstgüte;
das Gerät **gekennzeichnet durch**:
eine Verarbeitungseinheit (3) zum Bestimmen, ob eine Begrenzung einer in dem Zugangsnetzwerk verfügbaren Dienstgüte besteht, die verhindert, dass die autorisierte Dienstgüte erreicht wird, und falls ja, zum Erzeugen eines Berichts, der dieses an die Verfahrensweisen- und Gebührenerfassungsregeln-Funktion einschließlich der verfügbaren Dienstgüte berichtet; und
einen Sender (4) zum Senden des Berichts an die Verfahrensweisen- und Gebührenerfassungsregeln-Funktion.

10. Gerät nach Anspruch 9, wobei die Verarbeitungseinheit (3) ferner angeordnet ist, um die Verfahrensweisen- und Gebührenerfassungs-Kontrollregeln, für die die Dienstgüte nicht erreicht werden kann, in dem Bericht, der an die Verfahrensweisen- und Gebührenerfassungsregeln-Funktion zu senden ist, anzuzeigen.

11. Gerät, konfiguriert zum Operieren als eine Verfahrensweisen- und Gebührenerfassungsregeln-Funktion (5), um eine Kommunikationssitzung über ein IP-Konnektivitäts-Zugangsnetzwerk zwischen einem Benutzerendgerät und einer Anwendungsfunktion zu erleichtern, das Gerät umfassend:
einen Empfänger (6) zum Empfangen von Informationen, die zu der Sitzung in Beziehung stehen, von der Anwendungsfunktion;
eine Regelerzeugungseinheit (7) zum Bestimmen einer oder mehrerer Verfahrensweisen- und Gebührenerfassungs-Kontrollregeln für die Sitzung einschließlich einer für die Sitzung autorisierten Dienstgüte;
einen Sender (8) zum Senden der Verfahrensweisen- und Gebührenerfassungs-Kontrollregeln einschließlich der autorisierten Dienstgüte an eine Verfahrensweisen- und Gebührenerfassungs-Durchsetzungsfunktion;
das Gerät **gekennzeichnet durch**:
einen Empfänger (6) zum Empfangen eines Berichts von der Verfahrensweisen-und Gebührenerfassungs-Durchsetzungsfunktion, dass die autorisierte Dienstgüte aufgrund einer Begrenzung der in dem Zugangsnetzwerk verfügbaren Dienstgüte nicht erreicht werden kann, wobei der Bericht die verfügbare Dienstgüte enthält; und
eine Verarbeitungseinheit (9) zum Verwenden der verfügbaren Dienstgüte, um zu bestimmen, ob und/oder wie die Sitzung aufrechtzuerhalten ist.

12. Gerät nach Anspruch 11, wobei die Verarbeitungseinheit (9), um zu bestimmen, ob und/oder wie die Sitzung aufrechtzuerhalten ist, angeordnet ist, um eines oder mehreres des Folgenden durchzuführen:
Bestimmen, ob die autorisierte Dienstgüte für die Sitzung modifiziert werden kann, um die verfügbare Dienstgüte zu erreichen; und
Bestimmen, ob das Benutzerendgerät an einer oder mehreren zusätzlichen Sitzungen gleichzeitig teilnimmt, und falls ja, Bestimmen, ob die Dienstgüte von einer oder mehreren der zusätzlichen Sitzungen herabgestuft werden kann, um die für die zuerst erwähnte Sitzung verfügbare Dienstgüte zu erhöhen.

13. Gerät nach Anspruch 12, wobei die Verarbeitungseinheit (9) ferner angeordnet ist, um die autorisierte Dienstgüte zu modifizieren, wenn die autorisierte Dienstgüte für die Sitzung modifiziert werden kann, um die verfügbare Dienstgüte zu erreichen.

14. Gerät nach Anspruch 11, wobei die Verarbeitungseinheit (9) ferner angeordnet ist, um die Dienstgüte von einer oder mehreren der zusätzlichen Sitzungen herabzustufen, wenn das Benutzerendgerät an einer oder mehreren zusätzlichen Sitzungen gleichzeitig teilnimmt und die Dienstgüte von einer oder mehreren der zusätzlichen Sitzungen herabgestuft werden kann. um die für die Sitzung verfügbare Dienstgüte zu erhöhen.

15. Gerät nach Anspruch 14, das Gerät ferner umfassend:
einen Sender (8) zum Senden zusätzlicher Verfahrensweisen- und Gebührenerfassungs-Kontrollregeln für die oder jede der zusätzlichen Sitzungen an die Verfahrensweisen- und Gebührenerfassungs-Durchsetzungsfunktion, einschließlich der herabgestuften Dienstgüte, und zum Senden der Verfahrensweisen- und Gebührenerfassungs-Kontrollregeln für die zuerst erwähnte Sitzung an die Verfahrensweisen- und Gebührenerfassungs-Durchsetzungsfunktion, einschließlich der autorisierten Dienstgüte.

## Revendications

1. Procédé destiné à faciliter une session de communication entre un terminal d'utilisateur et une fonction d'application sur un réseau d'accès à connectivité IP, le procédé comprenant :
au niveau d'une fonction de politique et de règles de facturation, la réception d'informations relatives à la session à partir de la fonction d'application (D1), la détermination d'une ou plusieurs règles de commande de politique et de facturation pour la session (D2), notamment la dérivation d'une qualité de service autorisée pour la session, et l'envoi des règles de commande de politique et de facturation, en incluant la qualité de service autorisée, à une fonction d'application de politique et de facturation (D3) ;
le procédé étant **caractérisé par** :
au niveau de la fonction d'application de politique et de facturation, la mise en oeuvre de ladite une ou desdites plusieurs règles de commande de politique et de facturation (C2), en incluant la qualité de service autorisée pour la session, et, s'il est déterminé que la qualité de service autorisée ne peut pas être atteinte sous l'effet d'une limitation sur une qualité de service disponible dans le réseau d'accès, le signalement de cela dans un rapport à la fonction de politique et de règles de facturation et l'inclusion de la qualité de service disponible (C7) ;
au niveau de la fonction de politique et de règles de facturation, la réception du rapport en provenance de la fonction d'application de politique et de facturation incluant la qualité de service disponible (D4), et l'utilisation de la qualité de service disponible en vue de déterminer s'il convient de maintenir la session et/ou la manière de maintenir la session (D5).

2. Procédé selon la revendication 1, dans lequel le rapport, envoyé à la fonction de politique et de règles de facturation, indique les règles de commande de politique et de facturation pour lesquelles la qualité de service ne peut pas être atteinte.

3. Procédé selon la revendication 1, dans lequel l'étape d'utilisation de la qualité de service disponible en vue de déterminer s'il convient de maintenir la session et/ou la manière de maintenir la session comprend une ou plusieurs des étapes ci-dessous consistant à :
au niveau de la fonction de politique et de règles de facturation, déterminer si la qualité de service autorisée pour la session peut être modifiée en vue d'atteindre la qualité de service disponible ; et
au niveau de la fonction de politique et de règles de facturation, déterminer si le terminal d'utilisateur participe à une ou plusieurs sessions supplémentaires simultanément et, le cas échéant, déterminer si la qualité de service d'une ou plusieurs des sessions supplémentaires peut être abaissée en vue d'augmenter la qualité de service disponible pour la première session mentionnée.

4. Procédé selon la revendication 3, dans lequel si la qualité de service autorisée pour la session peut être modifiée en vue d'atteindre la qualité de service disponible, le procédé comprend en outre :
au niveau de la fonction de politique et de règles de facturation, la modification de la qualité de service autorisée et l'envoi des règles de commande de politique et de facturation à la fonction d'application de politique et de facturation, en incluant la qualité de service autorisée modifiée.

5. Procédé selon la revendication 3, dans lequel si le terminal d'utilisateur participe à une ou plusieurs sessions supplémentaires simultanément, et si la qualité de service d'une ou plusieurs des sessions supplémentaires peut être abaissée en vue d'augmenter la qualité de service disponible pour la session, le procédé comprend en outre :
au niveau de la fonction de politique et de règles de facturation, l'abaissement de la qualité de service d'une ou plusieurs des sessions supplémentaires, l'envoi de règles modifiées de commande de politique et de facturation pour les ou chacune des sessions supplémentaires à la fonction d'application de politique et de facturation, en incluant la qualité de service abaissée, et l'envoi des règles de commande de politique et de facturation pour la session à la fonction d'application de politique et de facturation, en incluant la qualité de service autorisée.

6. Procédé selon la revendication 3, dans lequel, si la fonction de politique et de règles de facturation détermine que la session ne peut être maintenue, le procédé comprend en outre :
au niveau de la fonction de politique et de règles de facturation, l'indication à la fonction d'application et à la fonction d'application de politique et de facturation que la session doit être interrompue (D6).

7. Procédé d'exploitation d'une fonction d'application de politique et de facturation en vue de faciliter une session de communication sur un réseau d'accès à connectivité IP entre un terminal d'utilisateur et une fonction d'application, le procédé comprenant :
la mise en oeuvre, dans ladite fonction d'application de politique et de facturation, d'une ou plusieurs règles de commande de politique et de facturation pour la session, reçues à partir d'une fonction de politique et de règles de facturation (C2), les règles de commande de politique et de facturation incluant une qualité de service autorisée pour la session ;
le procédé étant **caractérisé par** :
s'il est déterminé, par la fonction d'application de politique et de facturation, que la qualité de service autorisée ne peut pas être atteinte sous l'effet d'une limitation sur une qualité de service disponible dans le réseau d'accès, le signalement de cela, dans un rapport, à la fonction de politique et de règles de facturation et l'inclusion de la qualité de service disponible (C7).

8. Procédé d'exploitation d'une fonction de politique et de règles de facturation en vue de faciliter une session de communication sur un réseau d'accès à connectivité IP entre un terminal d'utilisateur et une fonction d'application, le procédé comprenant :
la réception d'informations relatives à la session à partir de la fonction d'application (D1) ;
la détermination d'une ou plusieurs règles de commande de politique et de facturation pour la session (D2), notamment la dérivation d'une qualité de service autorisée pour la session ;
l'envoi des règles de commande de politique et de facturation, incluant la qualité de service autorisée, à une fonction d'application de politique et de facturation (D3) ;
le procédé étant **caractérisé par** :
la réception d'un rapport en provenance de la fonction d'application de politique et de facturation indiquant que la qualité de service autorisée ne peut pas être atteinte sous l'effet de la limitation d'une qualité de service disponible dans le réseau d'accès (D4), le rapport incluant la qualité de service disponible ; et
l'utilisation de la qualité de service disponible en vue de déterminer s'il convient de maintenir la session et/ou la manière de maintenir la session (D5).

9. Dispositif configuré de manière à opérer en qualité de fonction d'application de politique et de facturation (1), en vue de faciliter une session de communication sur un réseau d'accès à connectivité IP, entre un terminal d'utilisateur et une fonction d'application, le dispositif comprenant :
un récepteur (2) destiné à recevoir une ou plusieurs règles de commande de politique et de facturation pour la session, en provenance d'une fonction de politique et de règles de facturation, incluant une qualité de service autorisée pour la session ;
le dispositif étant **caractérisé par** :
une unité de traitement (3) destinée à déterminer s'il existe une limitation sur une qualité de service disponible dans le réseau d'accès, laquelle empêche que la qualité de service autorisée soit atteinte et, le cas échéant, à générer un rapport signalant cela à la fonction de politique et de règles de facturation, en incluant la qualité de service disponible ; et
un émetteur (4) destiné à envoyer le rapport à la fonction de politique et de règles de facturation.

10. Dispositif selon la revendication 9, dans lequel l'unité de traitement (3) est en outre agencée de manière à indiquer les règles de commande de politique et de facturation pour lesquelles la qualité de service ne peut pas être atteinte dans le rapport à envoyer à la fonction de politique et de règles de facturation.

11. Dispositif configuré de manière à opérer en qualité de fonction de politique et de règles de facturation (5), en vue de faciliter une session de communication sur un réseau d'accès à connectivité IP, entre un terminal d'utilisateur et une fonction d'application, le dispositif comprenant :
un récepteur (6) destiné à recevoir des informations relatives à la session en provenance de la fonction d'application ;
une unité de génération de règles (7) destinée à déterminer une ou plusieurs règles de commande de politique et de facturation pour la session, et notamment à dériver une qualité de service autorisée pour la session ;
un émetteur (8) destiné à envoyer les règles de commande de politique et de facturation, en incluant la qualité de service autorisée, à une fonction d'application de politique et de facturation,
le dispositif étant **caractérisé par** :
un récepteur (6) destiné à recevoir un rapport en provenance de la fonction d'application de politique et de facturation, indiquant que la qualité de service autorisée ne peut pas être atteinte sous l'effet d'une limitation de la qualité de service disponible dans le réseau d'accès, le rapport incluant la qualité de service disponible ; et
une unité de traitement (9) destinée à utiliser la qualité de service disponible en vue de déterminer s'il convient de maintenir la session et/ou la manière de maintenir la session.

12. Dispositif selon la revendication 11, dans lequel, en vue de déterminer s'il convient de maintenir la session et/ou la manière de maintenir la session, l'unité de traitement (9) est agencée de manière à mettre en oeuvre l'une ou plusieurs des étapes ci-dessous consistant à :
déterminer si la qualité de service autorisée pour la session peut être modifiée en vue d'atteindre la qualité de service disponible ; et
déterminer si le terminal d'utilisateur participe à une ou plusieurs sessions supplémentaires simultanément et, le cas échéant, déterminer si la qualité de service d'une ou plusieurs des sessions supplémentaires peut être abaissée en vue d'augmenter la qualité de service disponible pour la première session mentionnée.

13. Dispositif selon la revendication 12, dans lequel l'unité de traitement (9) est en outre agencée de manière à modifier la qualité de service autorisée, si la qualité de service autorisée pour la session peut être modifiée en vue d'atteindre la qualité de service disponible.

14. Dispositif selon la revendication 11, dans lequel l'unité de traitement (9) est en outre agencée de manière à abaisser la qualité de service d'une ou plusieurs des sessions supplémentaires, si le terminal d'utilisateur participe à une ou plusieurs sessions supplémentaires simultanément, et si la qualité de service d'une ou plusieurs des sessions supplémentaires peut être abaissée en vue d'augmenter la qualité de service disponible pour la session.

15. Dispositif selon la revendication 14, le dispositif comprenant en outre :
un émetteur (8) destiné à envoyer des règles de commande de politique et de facturation supplémentaire pour les ou chacune des sessions supplémentaires à la fonction d'application de politique et de facturation, en incluant la qualité de service abaissée, et à envoyer les règles de commande de politique et de facturation pour la première session mentionnée à la fonction d'application de politique et de facturation, en incluant la qualité de service autorisée.
